# DEMANDE DE BREVET EUROPEEN

(11) **EP 1 918 263 A2**
(43) Date de publication de la demande: **07.05.2008**
(21) Numéro de dépôt: 07019387.5
(22) Date de dépôt: 03.10.2007
(51) Int. Cl.: C04B 28/26, C04B 14/06, C04B 24/26

(54) **Mortier pour joints de dallage**

(30) Priorité: 19.10.2006 EP 06076898
(71) Demandeur: Hexion Specialty Chemicals Research Belgium S.A., 1348 Ottignies Louvain-la-Neuve (BE)
(72) Inventeur: Sari, Mustapha, 93306 Aubervilliers Cedex (FR); Montanari, Jean-Luc, 93306 Aubervilliers Cedex (FR)

(57) **Abrégé**

Le but de l'invention a été de mettre au point une formulation pour joints de dallage susceptible de s'appliquer à sec et présentant après hydratation, de meilleures propriétés mécaniques que les systèmes existants. Une composition de mortier pour dallage extérieur caractérisée en ce qu'elle comprend : - des silicates alcalins - des polymères organiques sous forme de poudres redispersables - du sable siliceux sous forme de sable avec une granulométrie de 200 à 400 µm.

## Description

Dans le domaine des mortiers de joints de dallages extérieurs (de type pavés autobloquants, par exemple), on trouve actuellement des systèmes se différenciant par leur composition ainsi que par leur procédé d'application.

Traditionnellement, l'un des systèmes utilisés pour assurer le jointoiement des pavés consiste à remplir, à l'aide de balais, l'espace disponible par du sable, que l'on compactera ensuite à l'aide de dames caoutchoutées vibrantes.

Cette méthode, simple et économique, présente comme principal inconvénient le fait que ce sable, bien que tassé, est enlevé assez facilement par l'eau de pluie ou plus fréquemment par l'action abrasive de la circulation, du lavage, etc.

Dans certaines formules, le sable est lié par une faible fraction de ciment de type Portland (ou autre) : une fois le matériau pulvérulent mis en place dans les joints puis compacté, on procède à son arrosage, de manière à assurer l'hydratation et la prise du liant. L'inconvénient est que la prise se fait d'une manière hétérogène, ce qui pose, là encore, des problèmes de résistance et de durabilité.

Ces raisons ont poussé au développement de nouveaux systèmes relativement peu éloignés des précédents pour des questions de performance et de pérennité, essentiellement.

Le but des essais effectués a été de mettre au point une formulation pour joints extérieurs susceptible de s'appliquer à sec et présentant après hydratation, de meilleures propriétés mécaniques que les systèmes existants.

D'une manière générale, il est requis les performances suivantes :
- maintien du mode actuel de mise en place (balai, vibro-compactage)
- prise assez rapide (entre 1 et 2 jours)
- bonnes résistances mécaniques (résistance à la compression simple de l'ordre de 5 MPa)
- une certaine souplesse est requise pour encaisser les déformations éventuelles, ainsi que les contraintes thermiques.

L'invention a pour but d'identifier des additifs disponibles sous forme de poudre, pouvant se mélanger à sec avec une charge pulvérulente, et susceptibles de réagir en présence d'eau (sans malaxage préalable) pour former un matériau présentant les caractéristiques suivantes :
- maintien du mode actuel de mise en place (balai, vibro-compactage)
- prise assez rapide (entre 1 et 2 jours)
- bonnes résistances mécaniques (résistance à la compression simple de l'ordre de 5 MPa)
- une souplesse suffisante pour encaisser les déformations éventuelles, ainsi que les contraintes thermiques.

Les silicates alcalins (de sodium, calcium ou potassium) sont connus, dans les domaines de la fonderie et de la consolidation des sols, pour leur action liante : Ils sont généralement utilisés à faible taux, sous forme liquider pour lier des matériaux de type vitreux.

Les polymères, de type poudres redispersables, alcool polyvinylique ou autres, sont également susceptible d'assurer une fonction liante.

La composition de l'invention contient au moins le silicate et le latex qui agissent comme liants des matériaux minéraux pulvérulents (charges).

Les silicates de sodium (en forme liquide ou sous forme de poudre), la forme solide. étant préférée pour un mélange à sec, peuvent constituer le seul agent liant minéral (en l'absence de ciment) .
Les composés pulvérulents minéraux (charges) peuvent être composés de mélanges de minéraux, dont les préférés sont de la silice vitreuse, ou des matériaux siliceux ou silico-calcaires. L'usage de la dite composition est de remplir les interstices entre les pavés et autres revêtements tels que par exemple : les pierres brutes, les pavés de dallage, les carrelages en matériaux argileux, en pierre polie, en béton ou autre.
Le dosage peut varier de 1 à 10%, et de préférence de 1,5 à 3% en poids.
Dans le cas du silicate de sodium il est préférable qu'il présente un rapport Rp=SiO₂/Na₂O variant de 1 à 4, et de préférence de 3 à 4. Le silicate peut être utilisé seul ou en combinaison avec des réactifs organiques (tels que l'acide citrique), voire minéraux. La formulation peut contenir des pigments colorés de nature organique ou minérale.

Le Méta silicate de sodium anhydre (Na₂SiO₃) sous forme de poudre, est un exemple commercialisé sous le nom SIMET^{®} AP par la société Woellner France.

Le SIMET^{®} AP présente les caractéristiques suivantes :
- granulométrie (refus à 0,8 mm) : 2 % max
- masse volumique apparente (g/cm³) : 0,9 - 1,3
- blancheur (L en %) : 89 min
- extrait sec à 600°C (%) : 99,6 min
- SiO₂ sur tel quel (%) : 46,5 - 48,2
- Na₂O sur tel quel (%) : 51 - 53
- rapport Na₂O/ SiO₂ de l'ordre de 1,1

Du fait de son alcalinité, le SIMET^{®} AP est étiqueté Corrosif (C) R 34 -37, tout comme les ciments de type Portland.

Dans la gamme des poudres de latex AXILAT^{™} (précédemment Rhoximat) commercialisées par la société Hexion Specialty Chemicals Inc., la poudre PSB 150 est particulièrement recommandée pour son pouvoir liant élevé, son aptitude à l'utilisation à faible dosage, et également pour sa nature chimique : les latex de type styrène butadiène, réputés pour leur durabilité, sont couramment utilisés dans les applications extérieures (réparation, routes, etc.).
Une fois re-dispersée en phase aqueuse puis séchée, la très fine taille (0,15 µm environ) de la PSB 150 lui confère un excellent pouvoir liant. Pour les compositions de l'invention, d'autres poudres redispersibles, telles que les co-polymères, les ter-polymères ou autres, sur base d'acétate-Versatate de vinyle (le Versatate de vinyle est commercialisé sous la marque VeoVa^{®} par Hexion Specialty Chemicals Inc.), d'acétate de vinyle et d'éthylène, de polymères acryliques, styrène acrylique, styrène butadiène, ou tout autre polymère connu de l'homme de l'art, susceptible de présenter des propriétés liantes. Le polymère peut se présenter sous forme de poudre ou d'émulsion.

Le polymère est présent dans la formulation entre 0,5 et 20% en poids sec, de préférence entre 0,5 et 10 %, et encore plus indiqué entre 0,5 et 5%, et encore plus préféré entre 0,5 et 3%. La poudre AXILAT^{™} PSB 150 présente les caractéristiques suivantes :
- extrait sec (%) : 98 min.
- taux de cendres à 600°C (%) : 12 min.
- masse volumique non tassé (g/cm³) : 0,5 environ
- granulométrie en poudre (µm) : 85 environ
- T.M.F.F. après re-dispersion (°C) : 8 environ
- granulométrie après re-dispersion (µm) : 0,15 environ
Du point de vue toxicologique, le **AXILAT^{™}** PSB 150 ne présente aucune classification.

Le Sable **BE 01** de la société Sifraco, utilisé dans les tests couverts par l'invention, est un matériau siliceux, présentant une granulométrie comprise entre 200-400 µm.

De manière optionnelle la composition de l'invention peut contenir de 0 à 50% en poids d'autres liant minéraux tels que du ciment de type Portland, des ciments à haute teneur en alumine, de la chaux hydraulique et d'autres liants communément utilisés par l'homme de l'art, des combinaisons binaires, ternaires, voire quaternaires sont possibles. L'ajout de tels liants est connu pour augmenter encore plus la résistance mécanique du joint, dont sa résistance à la compression. Les liants minéraux ci-dessus peuvent être utilisés de manière préférentielle dans une quantité 0 à 15% en poids et de préférence de 0 à 8% en poids.

### Réalisation des éprouvettes d'essais

### Mélange n°1 :

- Sable BE 01: 97 g
- STMET^{®} AP : 3 g

### Mélange n°2 :

- Sable BE 01: 97 g
- SIMET^{®} AP: 2 g
- AXILAT^{™} PSB 150*: 1 g

Le mélange des poudres a été réalisé manuellement, afin de se mettre dans la configuration la plus défavorable possible.

Le taux d'eau (rapport "E / S") choisi pour le mouillage des produits pulvérulents a été de 10% en poids, dans les deux cas.

Au bout de 3 jours de conservation dans l'ambiance du laboratoire, le mélange a fait prise, donnant naissance à un matériau compact et résistant. Des mesures de résistance à la compression simple effectuées après 4 semaines de séchage en conditions standard ont donné une valeur moyenne de l'ordre de 10 MPa.
De plus, le test suivant montre que l'ajout de poudre redispersable diminue la sensibilité à l'eau : en immergeant des fragments d'éprouvettes dans des béchers remplis d'eau et au bout de douze heures, la composition résultant du mélange n°2 présente une tenue bien supérieure à celle du mélange basé sur la formulation n°1. La formulation n°2 est caractérisée par l'abaissement de son module d'élasticité, ce qui implique une plus grande déformabilité.

Un mortier de joints de dallage de l'invention à base de sable siliceux, de silicate et de poudre de polymère redispersable présente des propriétés intéressantes du point de vue :
- du mode d'application,
- de la cinétique de prise et de durcissement,
- des propriétés mécaniques finales du matériau constitué.

## Revendications

1. Une composition de mortier pour dallage extérieur **caractérisée en ce qu'**elle comprend :
- des silicates alcalins
- des polymères organiques sous forme de poudres redispersables
- une charge minérale sous forme de sable siliceux ou silico-calcaire.

2. La composition suivant la revendication 1, **caractérisée en ce que** les silicates soient de sodium, de potassium, de calcium ou une combinaison de ces alcalins.

3. La composition suivant la revendication 1, **caractérisée en ce que** les silicates soient de sodium, de potassium, de calcium ou une combinaison de ces alcalins, avec un dosage entre 1 à 10% en poids, et de préférence entre 1,5 et 3% en poids.

4. La composition suivant la revendication 3, **caractérisée en ce que** les silicates soient de sodium, avec un rapport Rp=SiO₂/Na₂O variant de 1 à 4, et de préférence de 3 à 4.

5. La composition suivant la revendication 1, **caractérisée en ce que** les polymères organiques soient sous forme de poudres redispersables résultant de l'atomisation de co-polymères, de ter- polymères ou autres, sur base d'acétate-versatate de vinyle, d'acétate de vinyle et d'éthylène, d'acrylique, de styrène acrylique ou de styrène butadiène.

6. La composition suivant les revendications 1-5, **caractérisée en ce que** le liant organique sous forme de poudre redispersable est un co-polymère de styrène butadiène.

7. La composition suivant les revendications 1-6, **caractérisée en ce que** le polymère organique sous forme de poudre est présent entre 0,5 à 20% en poids, et de préférence entre 0,5 et 10%, et encore plus indiqué entre 0,5 et 5 %, et encore plus préféré entre 0,5 et 3 % en poids.

8. La composition suivant les revendications 1-7, **caractérisée en ce que** de 0 à 50% en poids d'autres liants minéraux tels que du ciment type Portland, des ciments à haute contenu en alumine, de la chaux hydraulique soient présent, les liants minéraux ci-dessus peuvent être utilisés de manière préférentielle dans une quantité 0 à 15% en poids et de préférence de 0 à 8% en poids.

9. Une méthode d'application d'une des compositions précédentes qui consiste en :
- un mélange des ingrédients solides,
- un dépôt sur le dallage,
- un brossage du mélange pulvérulent dans les interstices (joints), et
- un arrosage de la surface du dallage avec de l'eau.

10. Un joint de dallage obtenu selon la revendication 9.
